# EUROPEAN PATENT APPLICATION

(11) **EP 3 739 409 A1**
(43) Date of publication of application: **18.11.2020**
(21) Application number: 18899601.1
(22) Date of filing: 20.11.2018
(51) Int. Cl.: G05B 23/02

(54) **OPERATION FLOW GENERATION DEVICE, SYSTEM, PROGRAM, AND OPERATION FLOW GENERATION METHOD**

(30) Priority: 12.01.2018 JP 2018003857
(71) Applicant: YOKOGAWA ELECTRIC CORPORATION, Musashino-shi Tokyo 180-8750 (JP)
(72) Inventor: AKIMOTO Ayako, Musashino-shi, Tokyo 180-8750 (JP); SAKURABA Yuichi, Musashino-shi, Tokyo 180-8750 (JP)
(74) Representative: Hoffmann Eitle
(86) International application number: PCT/JP2018/042911
(87) International publication number: WO 2019/138699

(57) **Abstract**

It is difficult to automate work such as irregular operations requiring complicated operation by a skilled operator. Provided is an operation flow generation apparatus including a manual operation acquiring section that acquires a log of at least one manual operation performed on at least one apparatus, in relation to performance of an automated operation procedure including at least one automated operation of the at least one apparatus; a correspondence determining section that determines a correspondence between each of the at least one manual operation and each of the at least one automated operation; and an operation flow generating section that generates an operation flow including an automated operation step expressing at least one automated operation performed by the automated operation procedure and a manual operation step expressing the at least one manual operation, based on the correspondence.

## Description

### BACKGROUND

### 1. TECHNICAL FIELD

The present invention relates to an operation flow generation apparatus, a system, a program, and an operation flow generation method.

### 2. RELATED ART

Automation of work has been progressing in conventional facilities such as plants that produce a product by controlling apparatuses, as shown in Patent Document 1, for example.

Patent Document 1: Japanese Patent Application Publication No 2017-91178

However, it is difficult to automate work such as irregular operations requiring complicated operation by a skilled operator.

### SUMMARY

In order to solve the above problem, according to a first aspect of the present invention, provided is an operation flow generation apparatus. The operation flow generation apparatus may comprise a manual operation acquiring section that acquires a log of at least one manual operation performed on at least one apparatus, in relation to performance of an automated operation procedure including at least one automated operation of the at least one apparatus. The operation flow generation apparatus may comprise a correspondence determining section that determines a correspondence between each of the at least one manual operation and each of the at least one automated operation. The operation flow generation apparatus may comprise an operation flow generating section that generates an operation flow including an automated operation step expressing at least one automated operation performed by the automated operation procedure and a manual operation step expressing the at least one manual operation, based on the correspondence.

The operation flow generation apparatus may further comprise a display control section that displays the automated operation step and the manual operation step of the operation flow in a manner to be distinguishable from each other.

The operation flow generation apparatus may further comprise a first operation flow storage section that stores an amount of manual operations included in the operation flow, in association with each of a plurality of operation flows that are each the operation flow. The display control section may display the operation flow together with the corresponding amount of manual operations.

The operation flow generation apparatus may further comprise a second operation flow storage section that stores a performance indicator for performance results of the automated operation procedure when the operation flow was generated, in association with each of a plurality of operation flows that are each the operation flow. The display control section may display the operation flow together with the corresponding performance indicator.

The display control section may display a comment appended to any automated operation among the at least one automated operation in a code of the automated operation procedure, in association with the automated operation step expressing this automated operation of the operation flow.

The display control section may display a message to be displayed to an operator during performance of any automated operation among the at least one automated operation, in association with the automated operation step expressing this automated operation of the operation flow.

The automated operation procedure may have a hierarchical structure including a main procedure and at least one sub procedure. The operation flow generating section may generate an operation flow with at least one hierarchical layer including a hierarchical layer in which the at least one manual operation was performed.

The operation flow generating section may include a granularity adjusting section that adjusts granularity of at least one of the automated operation step or the manual operation step.

The granularity adjusting section may cause the granularity of the automated operation step and the manual operation step to be the same. The operation flow generating section may generate the operation flow every time the automated operation procedure is performed a reference number of times.

The reference number of times that the automated operation procedure is performed may be a plurality. If a performance pattern of at least one of the manual operation or the automated operation differs between performances of the automated operation procedure performed the reference number of times, the operation flow generating section may generate the operation flow such that the manual operation step and the automated operation step expressing the manual operation and the automated operation performed during each performance of the automated operation procedure are respectively passed through a plurality of branch paths.

The operation flow generating section may associate a performance probability of each of the plurality of branch paths with this branch path.

The operation flow generation apparatus may further comprise an automated operation acquiring section that acquires a log of an automated operation that was performed, among the at least one automated operation.

The automated operation acquiring section may acquire a log of a start and an end of a procedure included in the automated operation procedure.

The operation flow generation apparatus may further comprise an automated operation procedure performing section that generates a plurality of operation commands for the at least one apparatus, from a code of the automated operation procedure. The automated operation acquiring section may acquire content of the automated operation that was performed, from the automated operation procedure performing section.

The manual operation acquiring section may acquire content of the at least one manual operation from a control section that controls the at least one apparatus.

The at least one manual operation may include a manual operation performed on an apparatus that is not a target of the at least one automated operation, among the at least one apparatus.

The correspondence determining section may determine the correspondence based on the timings at which each of the at least one manual operation and each of the at least one automated operation were performed.

The operation flow generation apparatus may further comprise an automated operation procedure generating section that generates a new automated operation procedure in which each step of the operation flow is expressed by a code of an automated operation.

According to a second aspect of the present invention, provided is a system. The system may comprise the operation flow generation apparatus of the first aspect. The system may comprise a control section that controls the at least one apparatus.

According to a third aspect of the present invention, provided is a program. The program may cause a computer to function as a manual operation acquiring section that acquires a log of at least one manual operation performed on at least one apparatus, in relation to performance of an automated operation procedure including at least one automated operation of the at least one apparatus. The program may cause the computer to function as a correspondence determining section that determines a correspondence between each of the at least one manual operation and each of the at least one automated operation. The program may cause the computer to function as an operation flow generating section that generates an operation flow including an automated operation step expressing at least one automated operation performed by the automated operation procedure and a manual operation step expressing the at least one manual operation, based on the correspondence.

According to a fourth aspect of the present invention, provided is an operation flow generation method. The operation flow generation method may comprise acquiring a log of at least one manual operation performed on at least one apparatus, in relation to performance of an automated operation procedure including at least one automated operation of the at least one apparatus. The operation flow generation method may comprise determining a correspondence between each of the at least one manual operation and each of the at least one automated operation. The operation flow generation method may comprise generating an operation flow including an automated operation step expressing at least one automated operation performed by the automated operation procedure and a manual operation step expressing the at least one manual operation, based on the correspondence.

The summary clause does not necessarily describe all necessary features of the embodiments of the present invention. The present invention may also be a sub-combination of the features described above.

### BRIEF DESCRIPTION OF THE DRAWINGS

Fig. 1 shows a system 1 according to the present embodiment.
Fig. 2 shows the operation of the operation flow generation apparatus 4.
Fig. 3 shows an example of an operation flow 100 generated from only the manual operations performed in a designated time period.
Fig. 4 shows an example of an automated operation procedure 200 generated for the process node 102(4) of Fig. 3.
Fig. 5 shows an example of an operation flow 300 generated when the automated operation procedure 200 of Fig. 4 has been performed and the work of Fig. 3 has been repeated a plurality of times.
Fig. 6 shows an example of an automated operation procedure 400 generated for all of the work in Fig. 3.
Fig. 7 shows an example of an operation flow 500 generated when the automated operation procedure 200 of Fig. 6 has been performed and the work of Fig. 3 has been performed a plurality of times.
Fig. 8 shows an example of an automated operation log acquired by the automated operation acquiring section 42 when the operation flow 500 of Fig. 7 was generated.
Fig. 9 shows an example of a manual operation log acquired by the manual operation acquiring section 43 when the operation flow 500 of Fig. 7 was generated.
Fig. 10 shows an example of a computer 2200 in which a plurality of aspects of the present invention may be wholly or partly embodied.

### DESCRIPTION OF EXEMPLARY EMBODIMENTS

Hereinafter, some embodiments of the present invention will be described. The embodiments do not limit the invention according to the claims, and all the combinations of the features described in the embodiments are not necessarily essential to means provided by aspects of the invention.

### (1. Configuration of the System)

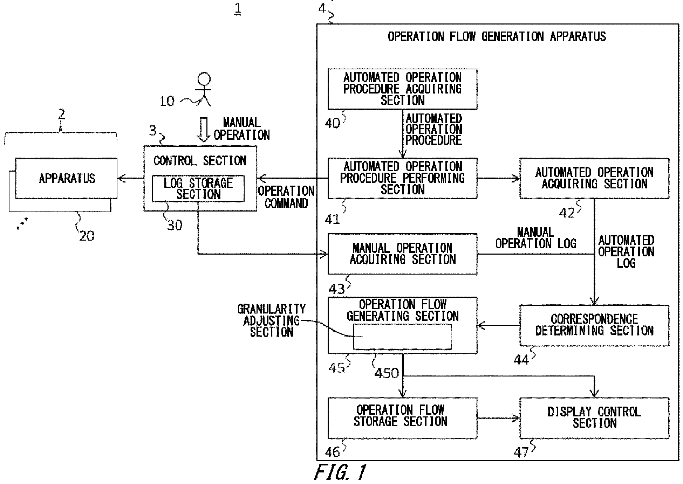

Fig. 1 shows a system 1 according to the present embodiment. The system 1 supports automation of operations performed on an apparatus group 2, and includes the apparatus group 2, a control section 3, and an operation flow generation apparatus 4.

### (1-1. Apparatus Group)

The apparatus group 2 includes at least one apparatus 20. Each apparatus 20 is a tool, machine, or apparatus that can be externally controlled, and may be provided in a facility such as a plant. For example, each apparatus 20 may be a sensor that measures a process value such as temperature, pressure, velocity, or flow rate, or may be an actuator such as a valve, fan, or motor that controls any of these process values. Furthermore, the apparatus 20 may be a warning apparatus that issues a warning to an operator 10, or may be a display apparatus that displays a message (e.g. a guidance message, alarm message, or confirmation message) to the operator 10. If the apparatus group 2 includes a plurality of apparatuses 20, each apparatus 20 may be a different type, or at least two of these apparatuses 20 may be the same type. At least one apparatus 20 in the apparatus group 2 may be capable of switching between an automated mode in which a set variable (SV) or a operated variable (OV) of the apparatus 20 is automatically adjusted to bring the process value closer to a target value and a manual mode in which the set variable or operated variable is set directly.

### (1-2. Control Section)

The control section 3 controls the apparatus group 2. For example, the control section 3 may perform focused control of a plurality of apparatuses 20 together. The control section 3 may be capable of controlling each apparatus 20 in the apparatus group 2 according to operation commands supplied from the operation flow generation apparatus 4. Furthermore, the control section 3 may be capable of controlling at least one apparatus 20 according to a manual operation by the operator 10.

When control has been performed, the control section 3 may generate a log in which the content of the control and the timing at which the control was performed are associated. The control section 3 may store the generated log data in a log storage section 30. As an example in the present embodiment, the control section 3 may store only log data concerning manual operations. The log storage section 30 may be formed outside of the control section 3. The control section 3 described above may be formed to include a DCS (Distributed Control System), for example.

### (1-3. Operation Flow Generation Apparatus)

The operation flow generation apparatus 4 supports automation of work by generating an operation flow corresponding to manual operations performed by the operator 10. For example, the operation flow generation apparatus 4 may generate the operation flow by acquiring a log of manual operations performed in association with automated operations of the apparatus group 2 via the control section 3. Here, the operation flow may display the relationship of operations (e.g. procedures), and as an example in the present embodiment, may display steps (excerpts) actually performed among predetermined procedures for the purpose of automation and procedures of steps performed using manual operations. The operation flow generation apparatus 4 includes an automated operation procedure acquiring section 40, an automated operation procedure performing section 41, an automated operation acquiring section 42, a manual operation acquiring section 43, a correspondence determining section 44, an operation flow generating section 45, an operation flow storage section 46, and a display control section 47.

### (1-3-1. Automated Operation Procedure Acquiring Section)

The automated operation procedure acquiring section 40 acquires an automated operation procedure that includes at least one automated operation performed on the apparatus group 2.

Here, the automated operation procedure defines work that has been automated to be performed on the apparatus group 2. The automated operation procedure may be source code written in a format that can be created and altered by a programmer or the like, for example, and may be performed after being interpreted or compiled. The automated operation procedure may have a hierarchical structure, and may include a main procedure and at least one sub procedure. The main procedure is a collection of operations expressing the overall work of the automated operation procedure, and the sub procedure is a collection of operations expressing a part of the work included in the automated operation procedure. The work to be automated by the automated operation procedure may be work performed during irregular operation in the plant, for example, such as when starting up, shutting down, replacing, or performing maintenance on one or more of the apparatuses 20, or when replacing a material to be used.

The automated operation performed on the apparatus group 2 may be a process performed automatically on the apparatus group 2 without requiring manual operation of the apparatus group 2 by the operator 10, and as an example in the present embodiment, may be a process performed by the automated operation procedure performing section 41. The automated operation is not limited to a process that actually causes an operation to be performed on the apparatus group 2, and may include various processes performed inside the control section 3 or the automated operation procedure performing section 41 in order to control the content of processes performed on the apparatus group 2. For example, the automated operation may be a process that outputs an operation command corresponding to an operation within the code of the automated operation procedure, a process that retrieves a sub procedure included in the automated operation procedure, a process returned from the sub procedure, or a process that determines an execution path by performed a judgment of conditional branches. The branching conditions may be a single condition, or may be the logical sum or logical product of a plurality of conditions. Here, as an example in the present embodiment, the operation command is a command for operating the apparatus group 2 via the control section 3, but the operation command may instead be a command for operating the apparatus group 2 directly without substantially using the control section 3. For example, the operation command may be supplied to the apparatus group 2 via the control section 3, without having the control section 3 perform any computational processing. Furthermore, if the operation flow generation apparatus 4 and the apparatus group 2 are directly connected via a network or the like, the operation command may be directly supplied to the apparatus group 2 from the operation flow generation apparatus 4, without passing through the control section 3.

The automated operation procedure acquiring section 40 may acquire the automated operation procedure based on an input operation made by the operator 10. The automated operation procedure acquiring section 40 may generate the automated operation procedure based on the content of the operation flow generated by the operation flow generation apparatus 4. For example, the automated operation procedure acquiring section 40 may generate the automated operation procedure by expressing each step of the operation flow with code of an automated operation. As an example, the automated operation procedure acquiring section 40 may generate the automated operation procedure from any operation flow stored in the operation flow storage section 46, which is described further below. The automated operation procedure acquiring section 40 may supply the automated operation procedure performing section 41 with the generated automated operation procedure.

### (1-3-2. Automated Operation Procedure Performing Section)

The automated operation procedure performing section 41 performs an automated operation of the apparatus group 2, by performing the automated operation procedure. For example, the automated operation procedure performing section 41 may retrieve a sub procedure by performing each operation included in the code of the automated operation procedure and return from this sub procedure, generate a plurality of operation commands for the apparatus group 2, or determine an execution path among conditional branches. The automated operation procedure performing section 41 may supply the control section 3 with the generated operation command. Furthermore, the automated operation procedure performing section 41 may supply the automated operation acquiring section 42 with the code of the automated operations that were performed. Instead, the automated operation procedure performing section 41 may supply the automated operation acquiring section 42 with the operation commands of the automated operations that were performed. The automated operation procedure performing section 41 may supply information to the control section 3 and the automated operation acquiring section 42 at the same time.

### (1-3-3. Automated Operation Acquiring Section)

The automated operation acquiring section 42 acquires a log of the automated operations performed on the apparatus group 2, among the automated operations included in the automated operation procedure.

For example, the automated operation acquiring section 42 may generate a log by acquiring the content of the performed automated operations, e.g. the operations corresponding to the automated operations among the plurality of operations included in the code of the automated operation procedure, from the automated operation procedure performing section 41. The automated operation acquiring section 42 may supply the correspondence determining section 44 with the acquired automated operation log. The automated operation acquiring section 42 may store log data of the automated operations in an internal storage section (not shown in the drawings).

### (1-3-4. Manual Operation Acquiring Section)

The manual operation acquiring section 43 acquires the log of at least one manual operation performed on the apparatus group 2 in relation to the performance of the automated operation procedure. For example, in a case where the degree of completion of the automated operation procedure is low, a manual operation is performed by an experienced operator 10 to correct errors or insufficiencies of the automated operation. The manual operation acquiring section 43 acquires a log of operations performed manually in this way. For example, the manual operation acquiring section 43 may acquire a log of manual operations performed on the apparatus group 2 via the control section 3, and as an example, may acquire the manual operation log from the log storage section 30. The manual operation acquiring section 43 may provide the correspondence determining section 44 with the acquired manual operation log. The manual operation performed in relation to the performance of the automated operation procedure may be a manual operation performed before, during, and/or after the performance of this automated operation procedure. The time during the performance of the automated operation procedure may include a time period from when the first automated operation in the automated operation procedure is performed until the final automated operation in the automated operation procedure is finished, or until a completion operation is performed by the operator 10.

### (1-3-5. Correspondence Determining Section)

The correspondence determining section 44 determines correspondence between each manual operation and each automated operation performed when the automated operation procedure was performed. Here, the correspondence between operations may be a temporal relationship between operations, for example, such as a before and after relationship or simultaneous relationship. The correspondence determining section 44 may determine the correspondence based on the timings at which the manual operations and automated operations are performed. The correspondence determining section 44 may provide the operation flow generating section 45 with the content of each acquired manual operation and automated operation and the determined correspondences.

### (1-3-6. Operation Flow Generating Section)

The operation flow generating section 45 generates the operation flow based on the correspondence determined by the correspondence determining section 44. The operation flow generating section 45 may generate the operation flow to include an automated operation step expressing at least one automated operation performed by the automated operation procedure and a manual operation step expressing at least one manual operation. For example, the operation flow generating section 45 may generate the operation flow by merging the automated operation step and the manual operation step according to the performance order.

### (1-3-6(1). Granularity Adjusting Section)

The operation flow generating section 45 may include a granularity adjusting section 450 that adjusts the granularity of the automated operation steps and/or manual operation steps. The step granularity is the degree of fineness, whereby a fine granularity refers to the content of a step being specific, while a coarse granularity refers to the content of a step being conceptual or abstract. The granularity adjusting section 450 may adjust the granularity of the automated operation steps by grouping a plurality of automated operations into a single automated operation step, dividing a single automated operation step into a plurality of automated operation steps, and the like. In addition to or instead of this, the granularity adjusting section 450 may adjust the granularity of the manual operation steps by grouping a plurality of manual operations into a single manual operation step, dividing a single manual operation step into a plurality of manual operation steps, and the like. Grouping a plurality of operations may include grouping these operations according to the purpose of the operations. As an example, the granularity adjusting section 450 may group a plurality of operations for changing a setting variable and/or operated variable together according to the trend of the change, into a single step with the purpose of increasing, decreasing, or finely adjusting a target process value. Furthermore, grouping a plurality of operations may include grouping a plurality of operations that have temporal continuity. For example, the granularity adjusting section 450 may group a plurality of operations that were performed continuously without the intervals between the operations exceeding a reference time. The granularity adjusting section 450 may group a plurality of manual operations into a single manual operation step and group a plurality of automated operations into a single automated operation step using the technology recorded in Japanese Patent Application Publication No. 2017-091178, Japanese Patent Application Publication No. 2017-091113, and/or Japanese Patent Application Publication No. 2017-091114.

Furthermore, the granularity adjusting section 450 may cause the automated operation steps and the manual operation steps to have the same granularity. For example, the granularity adjusting section 450 may adjust the granularity of one or both of the automated operation steps and the manual operation steps, in order to make these granularities the same. The granularity adjusting section 450 may group a plurality of automated operations that are continuous without containing a manual operation therebetween into one or more automated operation steps. For example, the granularity adjusting section 450 may group a plurality of automated operations that were performed during a time period in which no manual operation was performed into one or more automated operation steps.

The operation flow generating section 45 may provide the operation flow storage section 46 and the display control section 47 with the generated operation flow. The operation flow generating section 45 may provide a manual operation amount (e.g. the number of manual operations or the ratio of the number of manual operations to the total number of operations) included in the operation flow, in association with the operation flow.

### (1-3-7. Operation Flow Storage Section)

The operation flow storage section 46 stores at least one generated operation flow. The operation flow storage section 46 may be an example of a first operation flow storage section, and may store the manual operation amount included in each of a plurality of operation flows in association with the corresponding operation flow. The manual operation amount may be provided from the operation flow generating section 45. The operation flow storage section 46 may be an example of a second operation flow storage section, and may store, in association with each of a plurality of operation flows, a performance indicator for performance results of the automated operation procedure when this operation flow was generated. Here, the performance indicator may be a value obtained by evaluating the time required to perform the automation procedure, the quality of the product, and/or the amount of energy used, and the like, i.e. a so-called key performance indicator (KPI) of the automated operation procedure. The performance indicator may be calculated by the operation flow generation apparatus 4 from one or more process values and the like, or may be calculated by the operator 10 and input to the operation flow generation apparatus 4.

### (1-3-8. Display Control Section)

The display control section 47 displays the operation flow in a flow chart format or the like, in a manner making it possible to distinguish automated operation steps and manual operation steps from each other. For example, the display control section 47 uses display shapes, display colors, border thicknesses, character modifications, and/or added icons of flow chart symbols (also referred to as nodes) for the automated operation steps that differ from those used for the manual operation steps. The character modifications may include differences in at least one of the character color, font, character thickness, character line thickness, presence or lack of side lines or side points, or the like.

The display control section 47 may display the operation flow generated by the operation flow generating section 45, or may display an operation flow stored in the operation flow storage section 46. If the operation flow to be displayed has an associated manual operation amount, the display control section 47 may display this manual operation amount along with the operation flow. If the operation flow to be displayed has an associated performance indicator for the performance results, the display control section 47 may display the performance indicator along with the operation flow. The display control section 47 may display a single operation flow, or may display a plurality of operation flows together.

According to the operation flow generation apparatus 4 described above, a log of manual operations (e.g. manual operations performed to correct errors or insufficiencies of the automated operations) performed on the apparatus group 2 in association with the performance of the automated operation procedure is acquired, the correspondence between each manual operation and each automated operation is determined, and an operation flow including automated operation steps and manual operation steps is generated. Accordingly, the content of the manual operations can be expressed objectively without having the operator 10 perform a hearing, and understanding of the degree of completion of the automated operation procedure can be promoted. Furthermore, it is possible to encourage improvement by checking of the automated operation procedure of the portion where the manual operations are performed. Then, by further generating an operation flow when the improved automated operation procedure is performed, it is possible to consecutively improve the automated operation procedure in a gradual manner. Accordingly, it is possible to automate the work that requires complicated manual operations by an experienced operator 10.

Furthermore, since the operation flow is displayed in a manner making it possible to distinguish between the automated operation steps and the manual operation steps, it is easy to understand the degree of completion of the automated operation procedure. Furthermore, it is easier to understand the portions in need of improvement.

Since the manual operation amount and/or the performance indicator of the performance results is/are displayed along with the operation flow, it is even easier to understand the degree of completion of the automated operation procedure. Furthermore, when a plurality of operation flows are displayed together, it is possible to easily check the pros and cons of the original automated operation procedure.

Since the granularity of the automated operation steps and/or the manual operation steps is adjusted, it is possible to facilitate the abstract understanding of the operation flow. Furthermore, when a plurality of automated operations that are continuous without having a manual operation therebetween are grouped into one or more automated operation steps, it is possible to confirm the details of only the portions that need improvement, i.e. the portions where manual operations were performed, in the automated operation procedure. If the operation flow is to be generated with the same granularity for the automated operation steps and the manual operation steps, it is easier to understand the content of the operation flow, and therefore easier to understand the completion degree of the automated operation procedure.

Since the automated operation procedure is generated from the generated operation flow, it is possible to eliminate the effort of incorporating the content of the manual operations to generate a new automated operation procedure.

### (2. Operation of the Operation Flow Generation Apparatus)

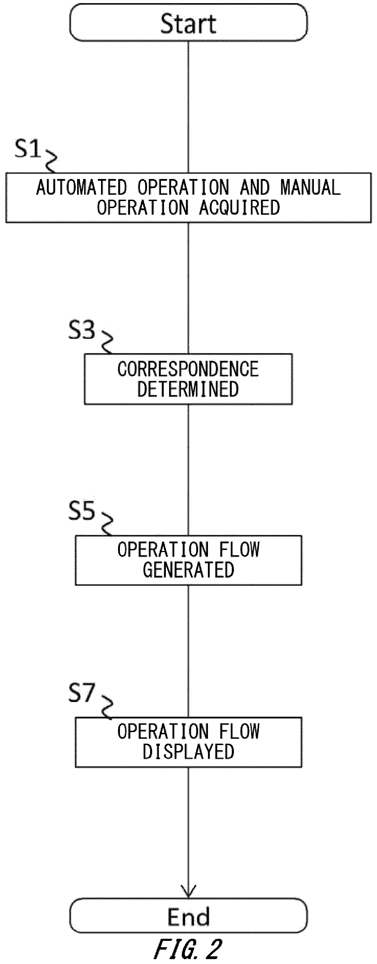

Fig. 2 shows the operation of the operation flow generation apparatus 4. The operation flow generation apparatus 4 generates the operation flow that includes automated operation steps and manual operation steps by performing the processes of steps S1 to S5. The operation flow generation apparatus 4 may display the generated operation flow by further performing the process of step S7. This process may be started by having the automated operation procedure performing section 41 perform any automated operation procedure a reference number of times. This reference number of times may be one or more.

First, at step S1, the automated operation acquiring section 42 acquires the log of automated operations performed during the performance of the automated operation procedure, and the manual operation acquiring section 43 acquires a log of the manual operations performed in relation to the performance of the automated operation procedure. The automated operation acquiring section 42 and the manual operation acquiring section 43 may acquire the operation log in which performance timings are associated with the operation content.

As an example, the automated operation acquiring section 42 may acquire the content of a performed automated operation from the automated operation procedure performing section 41, acquire the performance timing of the automated operation from a clock circuit, and generate the automated operation log in which the content and the performance timing are associated with each other.

The content of the automated operation may be displayed by an operation that is the basis for the automated operation among a plurality of operations included in the code of the automated operation procedure, or may be displayed by an operation and a parameter appended to this operation. The operation may include at least one of the processing content of the operation, a comment describing the purpose of the process, a work name of the procedure, or identification information of the operation. The identification information of the operation may be an identifier of an automated operation in the automated operation procedure, an identifier of a hierarchical level of the automated operation, and/or an identifier of an automated operation in a hierarchical level. The parameter may be a numerical value used in the operation, a message for the operator 10, a judgment result of a conditional branch, or the like. As an example, the automated operation acquiring section 42 may acquire an operation for changing a set variable in the apparatus 20 and the changed set variable in the apparatus 20 as the content of the performed automated operation. Furthermore, the automated operation acquiring section 42 may acquire an operation switching an apparatus 20 between an automated mode and a manual mode, and the mode after such switching. The automated operation acquiring section 42 may acquire an operation for displaying a message to the operator 10 and this message, or may acquire an operation for receiving a response to this message. The automated operation acquiring section 42 may acquire an operation of a conditional branch and the judgment result thereof. The automated operation acquiring section 42 may acquire an operation of a start and an end of at least one procedure (e.g. a main procedure and/or a sub procedure) included in the automated operation procedure, as the content of the automated operation. The message to the operator 10 may be displayed in the control section 3, or may be displayed in any of the apparatuses 20.

The performance timing of the automated operation may be the timing at which the automated operation acquiring section 42 receives the operation from the automated operation procedure performing section 41. A clock circuit may be included in the automated operation procedure performing section 41 instead of the automated operation acquiring section 42. In this case, the automated operation acquiring section 42 may acquire, from the automated operation procedure performing section 41, the log in which the content of the automated operations and the performance timing thereof (e.g. the timing at which the operation command was supplied from the automated operation procedure performing section 41 to the control section 3) are associated. If the automated operation has a long time span from the start of the performance to the end of the performance, the automated operation acquiring section 42 may acquire the log every reference time for the same automated operation.

The manual operation acquiring section 43 may acquire the manual operation log from the log storage section 30 of the control section 3. As an example, the log storage section 30 may include a clock circuit having a clock function, and may generate a log in which the timings at which the input of a manual operation are received are the performance timings of the operations and provide the manual operation acquiring section 43 with this log. The clock circuit generating the timing information included in the automated operation log and the clock circuit generating the timing information included in the manual operation log may be synchronized with each other. The manual operations acquired in the log may be manual operations performed on an apparatus 20 that is not the target of an automated operation in the automated operation procedure.

If the reference number of performances described above is a plurality of performances, the automated operation acquiring section 42 and/or the manual operation acquiring section 43 may acquire the operation log at each performance timing. If the same automated operation procedure is performed a plurality of times, this is because the performance pattern of the automated operations and the manual operations (e.g. the types, timings, and/or number of operations) can change due to the environmental conditions during performance, fluctuations of the capabilities of the apparatuses 20, and the like. Therefore, if the performance pattern of automated operations or manual operations differ due between performance iterations, it is possible to acquire an operation log of each iteration.

Next, at step S3, the correspondence determining section 44 determines the correspondence between each automated operation and each manual operation that has been performed. For example, the correspondence determining section 44 may determine the correspondence based on the temporal relationship between the performance timing of each automated operation and the performance timing of each manual operation.

Next, at step S5, the operation flow generating section 45 generates the operation flow including the automated operation steps and the manual operation steps, based on the determined correspondence. If the automated operation procedure has a hierarchical structure, the operation flow generating section 45 may generate the operation flow with at least one layer including a layer in which a manual operation is performed. If there is a sub procedure in which no manual operation is performed, the operation flow generating section 45 may generate an operation flow with a higher hierarchical layer than the sub procedure, including the sub procedure as a flowchart symbol of the defined process. In other words, the operation flow generating section 45 may generate an operation flow that includes a sub procedure in which a manual operation is not performed in a compressed state without being expanded.

The operation flow generating section 45 may generate the operation flow with a flow chart format or the like in which at least a portion of the content of the automated operations acquired by the automated operation acquiring section 42 are associated with an automated operation step including these automated operations. Having the content of an automated operation displayed in association with an automated operation step may include displaying the content of the automated operation within the automated operation step or displaying the content of the automated operation near the automated operation step. Furthermore, the operation flow generating section 45 may generate the operation flow such that the performance time is displayed in association with each automated operation step and each manual operation step. The performance timing of an automated operation step may be the performance timing of a leading automated operation included in this automated operation step. Similarly, the performance timing of a manual operation step may be the performance timing of a leading manual operation included in this manual operation step.

Every time an operation flow is generated, the granularity adjusting section 450 may cause the content of the step to be more abstract or conceptual by adjusting the granularity of the automated operation steps and/or the manual operation steps. Instead of or in addition to this, the operation flow generating section 45 may change the descriptions of a step to more abstract or conceptual content.

If the reference number of performances described above is a plurality of performances and the performance patterns of the manual operations and/or automated operations differ according to the performance iteration, the operation flow generating section 45 may generate the operation flow such that the manual operation step and the automated operation step representing the manual operations and the automated operations performed in each performance iteration are respectively passed through a plurality of branch paths. Furthermore, the operation flow generating section 45 may associate each branch path with a probability of the branch path being performed. Here, the probability of a branch path being performed may be a ratio of the number of times the branch path has been performed to a reference number of performances.

At step S7, the display control section 47 displays the operation flow in a flow chart format or the like making it possible to distinguish the automated operation steps and the manual operation steps from each other. If the content of the automated operations is associated with an automated operation step, the display control section 47 may display this information in association with the automated operation steps. For example, the display control section 47 may display a comment appended to one of the automated operations in the code of the automated operation procedure, in association with the automated operation step expressing this automated operation of the operation flow. The display control section 47 may display a message to be shown to the operator 10 during the performance of any one of the automated operations in the automated operation procedure, in association with the automated operation step expressing this automated operation in the operation flow. The display control section 47 may display the performance timing of automated operation steps and manual operation steps in association with these steps. The display control section 47 may expand and display a sub procedure displayed in a compressed manner or compress and display a sub procedure displayed in an expanded manner, according to an operation made by the operator 10.

In a state where the operation flow is displayed, the operation flow generating section 45 may edit the content of the operation flow according to an operation made by the operator 10. In this way, for example, descriptions in the flow chart symbols may be changed, the content such as comments displayed in association with the automated operation steps may be changed, and new comments may be associated with the manual operation steps.

According to the operation described above, comments and/or messages associated with the automated operations in the code of the automated operation procedure are displayed in association with the automated operation steps in the operation flow (e.g. the operation flow chart), and therefore it becomes easy to understand the content of the automated operation step.

Since the content of the automated operations is acquired from the automated operation procedure performing section 41 that generates the operation commands based on the code, it is possible to acquire the log including the comments in the code, the start and end of the procedures, and the like as the content of the automated operations. Accordingly, it is possible to generate the operation flow in a manner making it easy to understand the automated operations in each group. Furthermore, it is possible to judge whether to group a plurality of operations together in order to adjust the granularity of the steps, regardless of the intervals between operations.

Since the operation flow that is generated has a hierarchy of the performed manual operations, it is possible to easily understand which hierarchical layer among the plurality of layers in the automated operation procedure a manual operation was performed in. Furthermore, since the operation flow that is generated includes the sub procedures in which manual operations are not performed in a compressed state without being expanded, it becomes easy to understand the portions where manual operations have been performed, i.e. the portions in need of improvement.

If the operation flow is generated in response to the automated operation procedure having been performed a plurality of times, the operation flow is generated such that the operation steps expressing the automated operations and manual operations performed in each iteration are passed through a plurality of branch paths, and therefore it is possible to understand the variation in the automated operations and manual operations between each iteration. Furthermore, since the performance probability of each branch path is associated with this branch path, it is possible to recognize the manual operations that have a high possibility of improving the automated operation procedure.

Since the operation flow includes the log acquired for manual operations performed on apparatuses 20 that are not targets of automated operations according to the automated operation procedure, it is possible to know when an unexpected manual operation is needed for an apparatus 20 due to the performance of the automated operation procedure.

In the above description, the operation flow is generated in response to the automated operation procedure being performed, but instead, the operation flow including steps expressing the operations performed in a designated time period may be generated in response to the operator 10 designating this time period, without depending on the performance of the automated operation procedure. For example, the operation flow generation apparatus 4 may generate the operation flow including an automated operation step expressing automated operations performed according to the automated operation procedure in the designated time period and a manual operation step expressing the manual operations performed in this designated time period. In this case, the log data of the manual operations in the designated time period is acquired from the log storage section 30, and the log data of the automated operations is acquired from the storage section of the automated operation acquiring section 42. If the automated operation procedure is not performed in the designated time period, the operation flow generation apparatus 4 may generate the operation flow including only the manual operation step expressing the manual operations performed in this time period. A plurality of the designated time periods may be designated. In this case, the operation flow generation apparatus 4 may generate the operation flow such that the steps expressing the manual operations and automated operations performed in each designated time period are respectively passed through a plurality of branch paths.

Here, if the automated operation procedure acquiring section 40 generates the automated operation procedure from the operation flow including only the manual operation step, the automated operation procedure acquiring section 40 may generate the automated operation procedure to include an automated operation for displaying a guidance message based on a standard operation procedure (SOP) to the operator 10 and an automated operation for receiving a response from the operator 10 in response to the guidance message, in order to prompt a manual operation. By performing the automated operation procedure and acquiring the log of the manual operations in this way, it is possible to acquire the manual operations in time period segments from the display of the guidance message to the response, and to proceed with the automation in each segment.

### (3. Specific Example)

### (3-1. Operation Flow (1))

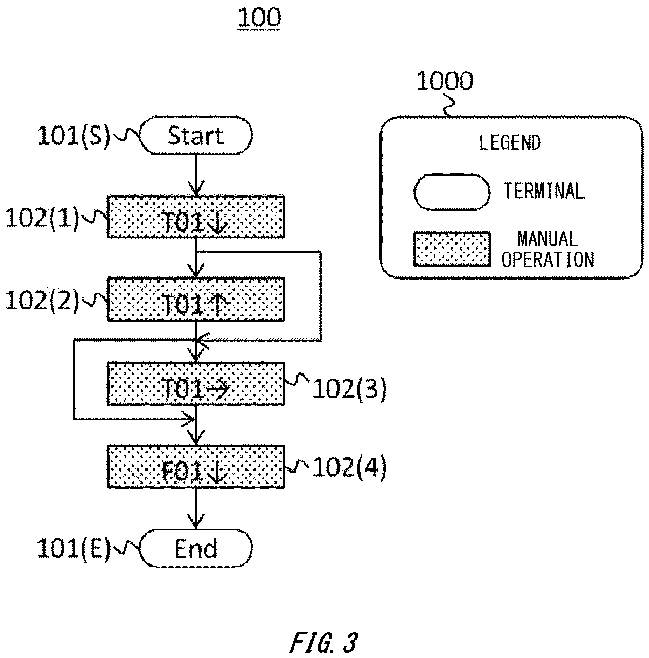

Fig. 3 shows an example of an operation flow 100 generated from only the manual operations performed in a designated time period. This operation flow includes displaying work for stopping the supply of a raw material to a reaction tower (not shown in the drawings) as preparation for switching out an apparatus 20 in a plant, for example, then further performing adjustments such as raising the temperature as needed and making fine adjustments (e.g. normal maintenance) after an apparatus 20_{T01} having the device identifier "T01", for example, is operated according to this work and the temperature of the reaction tower has dropped, and then operating an apparatus 20_{F01} having the device identifier "F01" to cut off the supply of the raw material.

The operation flow 100 includes terminal nodes 101 (101(S) and 101(E)) and process nodes 102 (102(1) to 102(4)) as flow chart symbols, and a legend 1000 indicating the meaning of the flowchart symbols used. The legend 1000 does not need to be included in the operation flow 100. The characters in parentheses appended to the symbols indicate the identifiers in the operation flow 100.

The terminal nodes 101 indicate the start and end of the operation flow 100. The process nodes 102 indicate manual operation steps in which one or more manual operations for changing a set variable and/or a operated variable for the same process value are grouped together according to the trend of this change, and are arranged according to the order of performance between the terminal nodes 101(S) and 101(E). As an example in the present embodiment, a plurality of designated time periods are designated, and the performance patterns of the manual operations differ between these designated time periods. Therefore, the process nodes 102(1) to 102(4) are arranged such that the manual operation steps expressing the manual operations performed in each designated time period pass respectively through a plurality of branch paths. An explanation of each process node 102 includes the device identifier (T01 or F01) of the apparatus 20 that is the operation target and an arrow symbol (arrow pointing up, arrow pointing down, or arrow pointing to the side) indicating the trend (raising, lowering, or fine adjustment) of the change of the process value. As an example, the process node 102(4) expresses a manual operation step in which a plurality of manual operations performed on the apparatus 20_{F01} to decrease the amount of raw material supplied are grouped together.

As seen from Fig. 3, although the lowering of the temperature of the reaction tower is performed through a series of complicated manual operations with the purpose of lowering, raising, and finely adjusting the temperature (see process nodes 102(1) to 102(3)), the cutting off of the raw material supply is performed just by a simple manual operation of reducing the amount of raw material being supplied (see process node 102(4)). The reason that the operation for lowering the temperature of the reaction tower is complicated is that temperature control generally includes a large time constant. Therefore, as an example in the present embodiment, when automating the work of Fig. 3, first, the manual operation of the process node 102(4) for cutting off the raw material supply is automated.

### (3-2. Automated Operation Procedure (1))

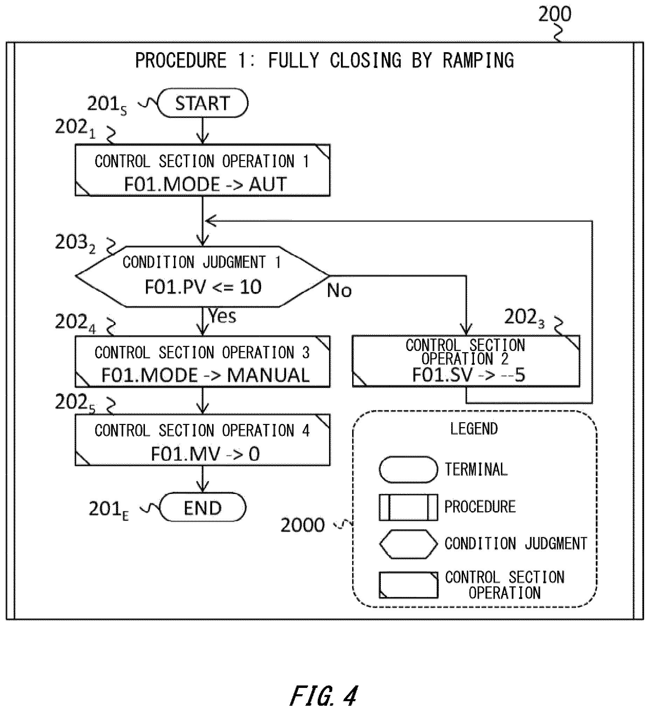

Fig. 4 shows an example of an automated operation procedure 200 generated for the process node 102(4) of Fig. 3. To facilitate understanding, the legend 2000 of the flow chart symbols is shown in a frame, but this legend 2000 does not need to be included in the automated operation procedure 200. The subscript characters appended to the symbols indicate the identifiers in the procedure.

The automated operation procedure 200 includes operations of terminal nodes 201 (201_{S} and 201_{E}), process nodes 202 (202₁, 202₃, 202₄, and 202₅), and a condition judgment node 203 (203₂). The terminal nodes 201 cause the automated operation procedure performing section 41 to start and end the automated operation procedure 200. The process nodes 202 cause one of the apparatuses 20 to operate by causing an operation command to be output from the automated operation procedure performing section 41 go the control section 3. The condition judgment node 203 causes the automated operation procedure performing section 41 to perform a judgment process.

The automated operation procedure 200 includes work named "full closing by ramping" for cutting off the raw material supply by performing an operation that gradually changes a set variable a plurality of times, i.e. a ramping operation, according to the process nodes 202₁ to 202₅. When the automated operation procedure 200 is started at the terminal node 201_{S}, the apparatus 20_{F01} is set to the automated mode at the process node 202₁. Next, at the condition judgment node 203₂, a judgment is made concerning whether the process value of the apparatus 20_{F01} is less than or equal to 10. If the judgment result is negative (203₂; No), the set variable of the apparatus 20_{F01} is reduced by 5 at the process node 202₃, and the process moves to the condition judgment node 203₂. If the judgment result is affirmative at the condition judgment node 203₂ (203₂; Yes), after the apparatus 20_{F01} has been set to the manual mode at the process node 202₄, the operated variable of the apparatus 20_{F01} is set to zero at the process node 202₅. Then, the automated operation procedure 200 is ended at the terminal node 201_{E}.

### (3-3. Operation Flow (2))

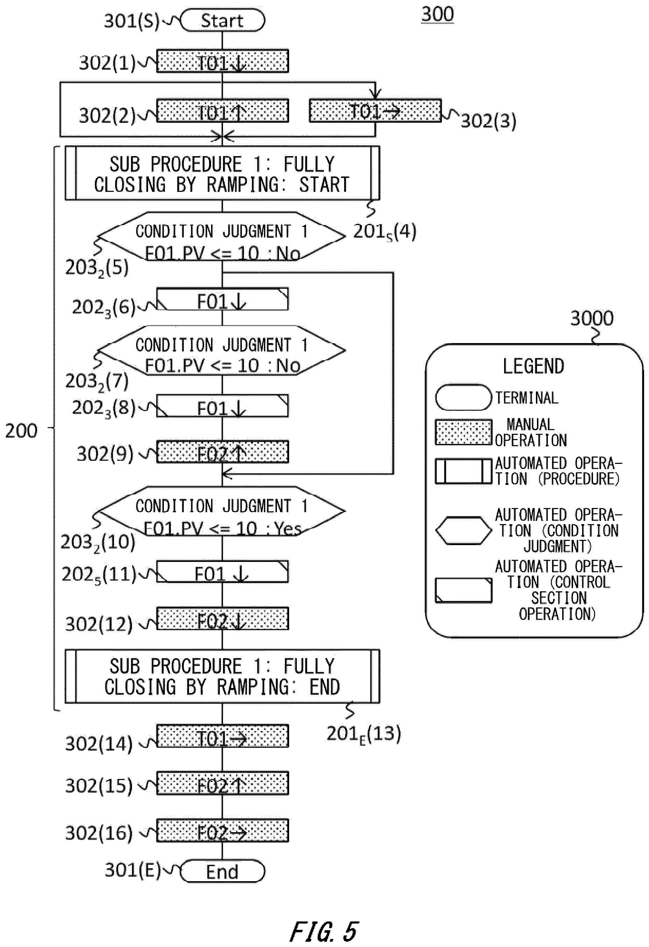

Fig. 5 shows an example of an operation flow 300 generated when the automated operation procedure 200 of Fig. 4 has been performed and the work of Fig. 3 has been repeated a plurality of times. As an example, the operation flow 300 may be generated by the operation flow generating section 45 when a designation has been made to include each performance time period of the work of Fig. 3.

The operation flow 300 includes terminal nodes 301 (301(S) and 301(E)) and process nodes 201 to 203 (201_{S}(4), 203₂(5), 202₃(6), 203₂(7), 202₃(8), 203₂(10), 202₅(11)) and 302 (302(1) to 302(3), 302(9), 302(12), and 302(14) to 302(16)) as flow chart symbols, and a legend 3000. The characters in parentheses appended to the symbols indicate the identifiers in the operation flow 300, and the subscript characters appended to the symbols indicate the identifiers of the automated operations in the automated operation procedure 200.

Here, the terminal nodes 301 express the start and end of the operation flow 300. The process nodes 201 to 203 express automated operation steps. Among these, the process nodes 201_{S}(4) and 201_{E}(13) are automated operation steps expressing automated operations of the terminal nodes 201_{S} and 201_{E} in the automated operation procedure 200. The process nodes of the automated operation steps from the process node 20 1_{S}(4) to the process node 201_{E}(13) are performed based on the automated operation procedure 200. The work name in the automated operation procedure 200 may be changed to "stopping inlet flow", which is more abstract and conceptual than the work name "fully closing by ramping" in the code of the automated operation procedure 200, in order to make it easier to understand the processing content.

The process nodes 202₃(6) and 202₃(8) are automated operation steps for reducing a set variable of the apparatus 20_{F01} by using the operations of the process node 202₃ in the automated operation procedure 200. Furthermore, the process node 202₅(11) is an automated operation step in which an automated operation for setting the apparatus 20_{F01} to the manual mode by using the operation of the process node 202₄ in the automated operation procedure 200 and an automated operation for setting the operated variable of the apparatus 20_{F01} to zero by using the operation of the process node 202₅ are grouped together. The explanations of the process nodes 202₃(6), 202₃(8), and 202₅(11) are changed to content that is more abstract and conceptual than in the code of the automated operation procedure 200, to make it easier to understand the processing content.

The process node 203₂(5) is an automated operation step in which an automated operation for setting the apparatus 20_{F01} to the automated mode by using the operation of the process node 202₁ in the automated operation procedure 200 and an automated operation for judging a conditional branch and determining a performance path by using the operation of the condition judgment node 203₂ in the automated operation procedure 200 are grouped together. The process nodes 203₂(7) and 203₂(10) are automated operation steps for judging a conditional branch and determining a performance path by using the operation of the condition judgment node 203₂ in the automated operation procedure 200.

The process nodes 302 express manual operation steps. Among these, the process nodes 302(1) to 302(3) express manual operations having the same content as before the automation of the work of the process node 102(4) by the automated operation procedure 200 (see process nodes 102(1) to 102(3) in Fig. 3). The process nodes 302(9), 302(12), and 302(14) to 302(16) express new manual operations that were not performed before the automation of the work. In particular, the process nodes 302(9), 302(12), 302(15), and 302(16) are operations performed on the apparatus 20_{F02} having the device identifier "F02" that is not the target of the operation by the automated operation procedure 200. As an example, the operations of these process nodes 302(9), 302(12), 302(15), and 302(16) may be manual operation steps for controlling a process value of a flow rate that differs from that of the apparatus 20_{F01}.

### (3-4. Automated Operation Procedure (2))

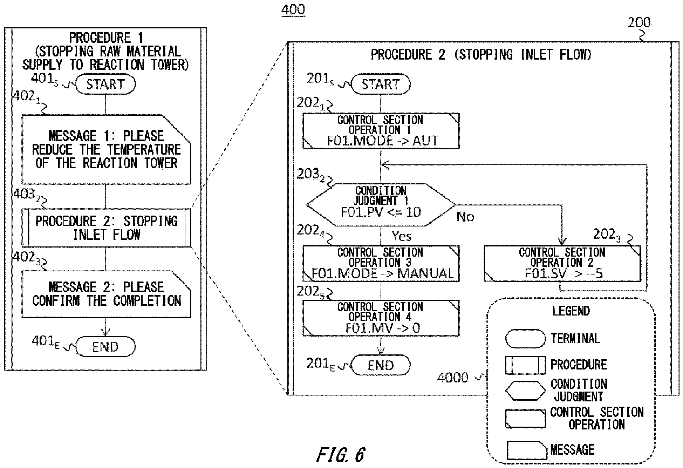

Fig. 6 shows an example of an automated operation procedure 400 generated for all of the work in Fig. 3. The automated operation procedure 400 may be generated by the operator 10, or may be generated by the automated operation procedure acquiring section 40. The automated operation procedure 400 is not completely automated, and it is assumed that the operator 10 will perform suitable manual operations, and the automated operation procedure 400 includes automated operations for displaying guide messages to the operator 10 to prompt the performance of manual operations on the apparatus 20_{T01}. Furthermore, the flow chart symbols are shown in a frame of a legend 4000 in order to facilitate understanding, but the legend 4000 does not need to be included in the automated operation procedure 400.

The automated operation procedure 400 includes operations of terminal nodes 401 (401_{S} and 401_{E}), process nodes 402 (402₁ and 402₃), and a defined process node 403 (403₂). The terminal nodes 401 cause the automated operation procedure performing section 41 to start and end the automated operation procedure 400. The process nodes 402 cause messages to be displayed to the operator 10, by causing operation commands to be output from the automated operation procedure performing section 41 to the control section 3. The defined process node 403 causes the automated operation procedure performing section 41 to perform the automated operation procedure 200, as a sub procedure. By incorporating the automated operation procedure 200 in the automated operation procedure 400 as a defined sub procedure, it becomes easier to understand the overall image of the procedure. As an example in the present embodiment, the work name of the automated operation procedure 200 is changed to "stopping inlet flow", which is more abstract and conceptual, by the operator 10 to make it even easier to understand the content of the procedure.

After the automated operation procedure 400 is started at the terminal node 401_{S}, a guidance message of "please reduce the temperature of the reaction tower" is displayed to the operator 10 at the process node 402₁, to prompt the operator 10 to perform the manual operations of the process nodes 102(1) to 102(3) in the operation flow 100. Next, after the operator 10 has reduced the temperature of the reaction tower by performing the manual operations on the apparatus 20_{T01}, when a completion operation is performed, the automated operation procedure 200 is the performed at the defined process node 403₂, and the automated operation is performed on the apparatus 20_{F01} to cut off the supply of the raw material. Next, a guidance message of "please confirm the completion" is displayed to the operator 10 at the process node 402₃ to prompt the operator 10 to perform the manual operation indicating confirmation of the completion of the work. Then, when the operator 10 performs the completion operation, the automated operation procedure 400 ends at the terminal node 401_{E}.

### (3-5. Operation Flow (3))

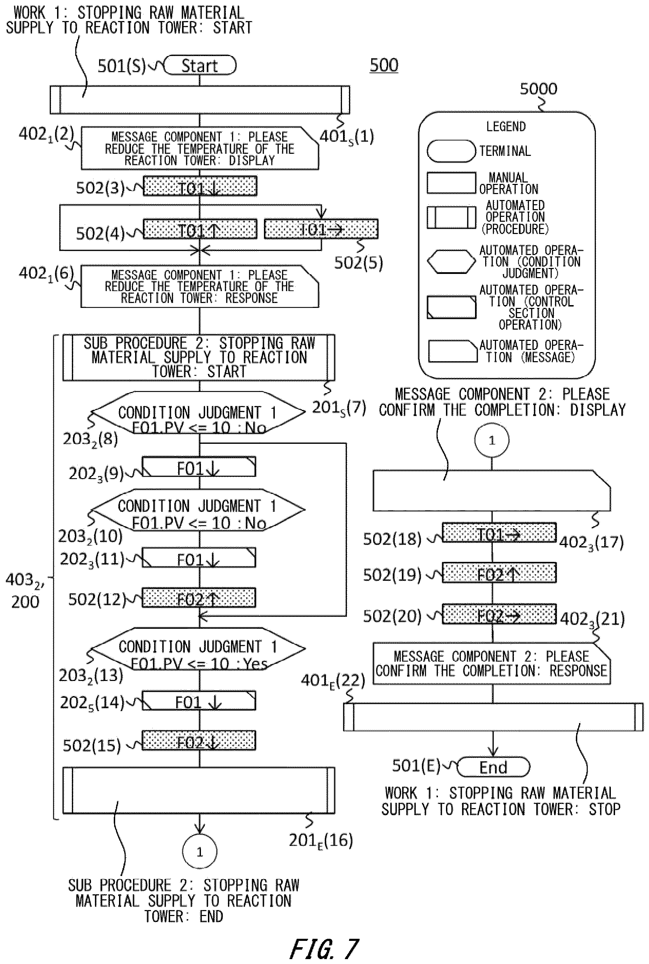

Fig. 7 shows an example of an operation flow 500 generated when the automated operation procedure 200 of Fig. 6 has been performed and the work of Fig. 3 has been performed a plurality of times. As an example, the operation flow 500 may be generated by the operation flow generating section 45 when a designation has been made to include each performance time period of the work of Fig. 3.

The operation flow 500 includes terminal nodes 501 (501(S) and 501(E)) and process nodes 201 to 203 (201_{S}(7), 203₂(8), 202₃(9), 203₂(10), 202₃(11), 203₂(13), 202₅(14), and 201_{E}(16)), process nodes 401 and 402 (401_{S}(1), 402₁(2), 402₁(6), 402₃(17), 402₃(21), and 401_{E}(22)), and process nodes 502 (502(3) to 502(5), 502(12), 502(15), and 502(18) to 502(20)) as flow chart symbols, and a legend 5000. The characters in parentheses appended to the symbols indicate the identifiers in the operation flow 500, and the subscript characters appended to the symbols indicate the identifiers of the automated operations in the automated operation procedure 400.

Here, the terminal nodes 501 express the start and end of the operation flow 500. The process nodes 201 to 203, 401, and 402 express automated operation steps. Among these, the process nodes 201 to 203 are performed based on the automated operation procedure 200, in the same manner as in the operation flow 300. The process nodes 201_{S}(7) and 201_{E}(16) corresponding to the automated operation procedure 200 may be displayed in a compressed manner using the defined flow chart symbols, according to an operation from the operator 10.

The process nodes 401_{S}(1) and 401_{E}(22) are automated operation steps expressing automated operations of the terminal nodes 401_{S} and 401_{E} in the automated operation procedure 400. The process nodes of the automated operation steps from the process node 401_{S}(1) to the process node 401_{E}(22) are performed based on the automated operation procedure 400.

The process node 402₁(2) is an automated operation step for displaying the guidance message of "please reduce the temperature of the reaction tower" by using the operation of the process node 402₁ in the automated operation procedure 400. The process node 402₁(6) is an automated operation step for waiting for the completion operation from the operator 10 using the operation of the process node 402₁.

The process node 402₃(17) is an automated operation step for displaying the guidance message of "please confirm the completion" by using the operation of the process node 402₃ in the automated operation procedure 400. The process node 402₃(21) is an automated operation step for waiting for the completion operation from the operator 10 using the operation of the process node 402₃.

The process nodes 502 express manual operation steps. Among these, the process nodes 502(3) to 502(5) express manual operations having the same content as before the automation of the work of Fig. 3 by the automated operation procedure 400 (see process nodes 102(1) to 102(3) in Fig. 3). The process nodes 502(12), 502(15), and 502(18) to 502(20) express new manual operations that were not performed before the automation of the work.

According to the operation flow 500 described above, by displaying nodes that show the start and end of the procedure and the display of and responses to messages in the series of operations, it becomes easier to understand the segmentation of the work.

### (4. Automated Operation Log)

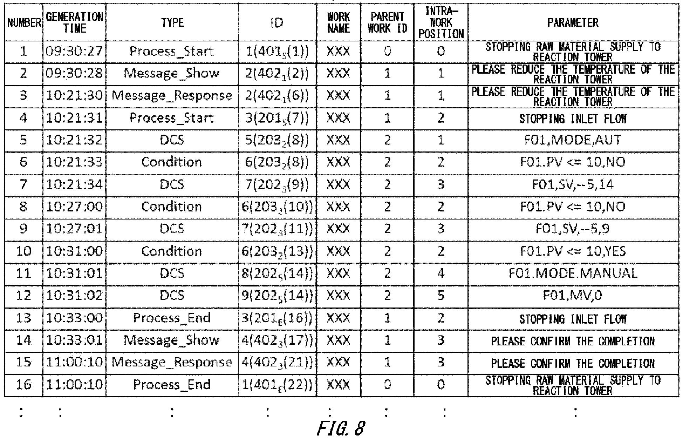

Fig. 8 shows an example of an automated operation log acquired by the automated operation acquiring section 42 when the operation flow 500 of Fig. 7 was generated.

In this drawing, the first to sixteenth rows correspond respectively to the automated operations of the nodes 401_{S}(1), 402₁(2), 402₁(6), 201s(7), 203₂(8), 203₂(8), 202₃(9), 203₂(10), 202₃(11), 203₂(13), 202₅(14), 202₅(14), 201_{E}(16), 402₃(17), 402₃(21), and 401_{E}(22) of the operation flow 500. The process node 203₂(8) is an automated operation step in which the two process nodes 202₁ and 203₂ are grouped together in the automated operation procedure 200, and therefore a log for each original automated operation is acquired in the automated operation log. Similarly, the process node 202₅(14) is an automated operation step in which the two process nodes 202₄ and 202₅ are grouped together in the automated operation procedure 200, and therefore a log for each original automated operation is acquired in the automated operation log.

The "generation timing" in the first column shows the timing at which the content of the automated operation was received. In Fig. 8, the year, month, and day are omitted, and only hours, minutes, and seconds are shown.

The second and following columns show content of the acquired automated operations. Among these, the "parameter" in the final column shows a comment describing the purpose of the process, the work name of the sub procedure, a message to be shown to the operator 10, a description of a condition in a conditional branch and a result thereof, or an operation command for the control section 3. The content in the second to sixth columns described below may be included in a parameter.

The "type" in the second column shows the type of automated operation. For example, "Process_Start" and "Process_End" indicate automated operations for starting and ending the procedure. "Message_Show" and "Message_Response" indicate an automated operation for showing a guidance message to the operator 10 and an automated operation for waiting for a response operation of the operator 10 in response to the guidance message. "DCS" indicates an automated operation performed on the control section 3 to control a process value. "Condition" indicates an automated operation of a conditional branch.

The "ID" in the third column shows an identifier of the automated operation in the automated operation procedure 400. In Fig. 8, the symbols of the process nodes 201 to 203, 401, and 402 of corresponding automated operation steps in the operation flow 500 of Fig. 7 are shown in parentheses, to facilitate understanding. As an example, the "Process_Start" operation in the first row and the "Process_End" operation in the final row both relate to the first automated operation, and therefore "1" is set for the ID. The identifier of the "ID" may be set for each automated operation every time the automated operation acquiring section 42 acquires content of the automated operation.

The "work name" in the fourth column shows the name of the work performed in the automated operation procedure. For example, the "work name" in each row may be "stopping raw material supply to reaction tower".

The "parent work ID" in the fifth column shows an identifier of an associated hierarchical layer in the procedure. For example, the "Process_Start" and "Process_End" processes in the first row and the final row may be associated with a procedure in a hierarchical layer above the automated operation procedure 400 that is a main procedure, and the "parent work ID" may be set to "0" to express this hierarchical level. Furthermore, the processes in the second to fourth rows and the thirteenth to fifteenth rows may be associated with the automated operation procedure 400 that is the main procedure, and the "parent work ID" for each of these processes may be set to "1" to express this hierarchical layer. Yet further, the processes in the fifth to twelfth rows may be associated with the automated operation procedure 200 that is a sub procedure, and the "parent work ID" for each of these processes may be set to "2" to express this hierarchical layer. The identifier of the "parent work ID" may be set for each automated operation every time the automated operation acquiring section 42 acquires content of the automated operation.

The "intra-work position" in the sixth column indicates an identifier of the automated operation within the hierarchical layer. For example, the processes of the second and third rows have an identification number of "1" in the main procedure that has a hierarchical level of "1". The identifier of the "intra-work position" may be set for each automated operation every time the automated operation acquiring section 42 acquires content of the automated operation.

### (5. Manual Operation Log)

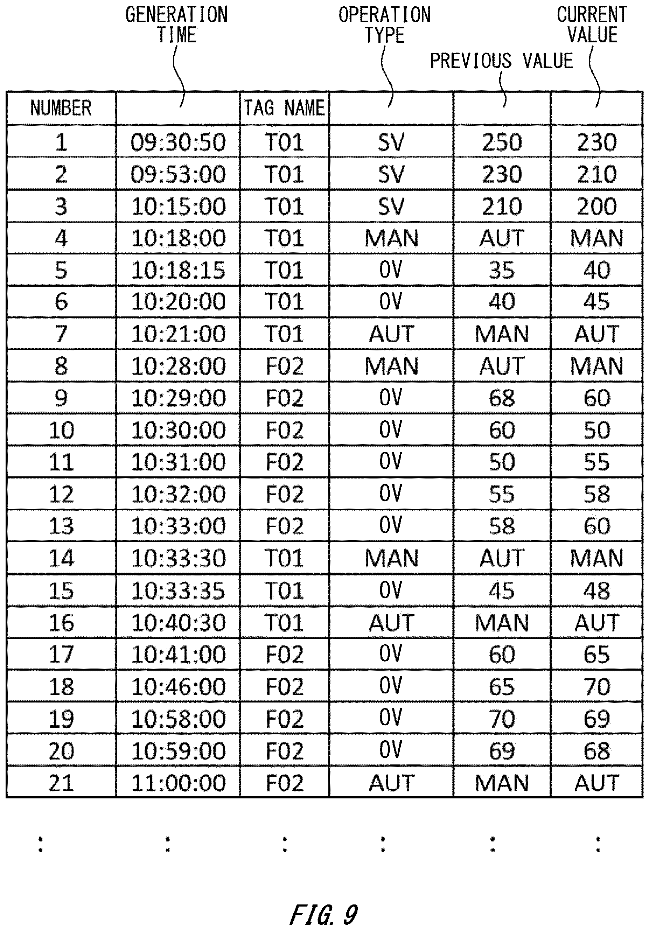

Fig. 9 shows an example of a manual operation log acquired by the manual operation acquiring section 43 when the operation flow 500 of Fig. 7 was generated.

In this drawing, the first to seventh rows correspond to the manual operations of the process nodes 502(3) to 502(5) in the operation flow 500. The eighth to eleventh rows correspond to the manual operation of the process node 502(12). The twelfth and thirteenth rows correspond to the manual operation of the process node 502(15). The fourteenth to twenty-first rows correspond to the manual operations of the process nodes 502(18) to 502(20).

The "generation timing" in the first column shows the timing at which the content of the manual operation was received. In Fig. 9, the year, month, and day are omitted, and only hours, minutes, and seconds are shown. The generation timing in Fig. 9 may be a timing on the same day as the generation timing in Fig. 8.

The "tag name" in the second column shows a device identifier of an apparatus 20. The "operation type" in the third column shows the type of manual operation, with "SV" and OV" indicating changes of a set variable and a operated variable and "MAN" and "AUT" indicating a change to the manual mode and automated mode. The "previous value" in the fourth column and the "current value" in the fifth column show the set content before the change and the set content after the change.

The operation flow 500 of Fig. 7 can be generated from the content of Fig. 8 and Fig. 9 described above. The content of Figs. 8 and 9 may be displayed in response to an operation from the operator 10. In this way, it is possible to designate any time period based on the "generation timing" in the log, and to check the operation content objectively. Furthermore, it is possible to designate the time period to include portions in the work for which improvement is desired, to generate the operation flow and therefore the automated operation procedure.

### (6. Modifications)

In the embodiment described above, the control section 3 acquires an operation command to control the apparatus group 2, but instead, the control section 3 may acquire an operation in the code of the automated operation procedure to control the apparatus group 2. In this case, the operation and the performance timing thereof may be stored in the log storage section 30 as the automated operation log.

The system 1 described above includes the one or more apparatuses 20, but this is not necessary. In this case, the system 1 may be connected to one or more apparatuses 20 provided outside the system 1. Furthermore, the system 1 described above includes one control section 3, but may instead include a plurality of control sections 3. In this case, the operation flow generation apparatus 4 may perform automated operations on a plurality of apparatus groups 2 via the plurality of control sections 3. If there is a master and slave relationship among the plurality of control sections 3, the operation flow generation apparatus 4 may perform automated control of one of more slave control sections 3, and therefore automated control of each apparatus group 2 corresponding to the one or more slave control sections 3, via a master control section 3.

The automated operation acquiring section 42 described above acquires the automated operation log from the automated operation procedure performing section 41, but may instead acquire this log from the log storage section 30. The log storage section 30 may store the automated operation log in a manner to make it distinguishable from the manual operation log, according to a setting from the operator 10. In this case, it is possible to acquire the automated operation and manual operation logs together from the log storage section 30, and generate the operation flow. The log storage section 30 may store operation commands as the content of the automated operations, or may store operations in the code of the automated operation procedure.

The operation flow generation apparatus 4 described above includes the automated operation acquiring section 42, but this is not necessary. In this case, the operation flow generation apparatus 4 may acquire only the automated operations when performance has ended or during the performance, instead of the automated operation log, and associate the automated operations with manual operations in the log of manual operations performed at the acquisition timing. Furthermore, the correspondence determining section 44 may determine the correspondence between the manual operations and the automated operations using this log. The operation flow generating section 45 may generate the operation flow by adding manual operation steps to the operation flow of automated operations generated form the code of the automated operation procedure.

The operation flow generation apparatus 4 described above includes the automated operation procedure acquiring section 40, the automated operation procedure performing section 41, and the display control section 47, but may omit any of these. If the operation flow generation apparatus 4 does not include the automated operation procedure acquiring section 40 and the automated operation procedure performing section 41, an operation command may be provided to the control section 3 from outside the operation flow generation apparatus 4, and the content of the automated operations may be provided to the automated operation acquiring section 42 from the outside. If the operation flow generation apparatus 4 does not include the display control section 47, data of the operation flow generated by the operation flow generation apparatus 4 may be provided to an external apparatus to perform display control.

The manual operation acquiring section 43 described above acquires the manual operation log from the log storage section 30, but instead of or in addition to this, the manual operation acquiring section 43 may acquire a log of at least one of the manual operations performed directly on the apparatus group 2 or the manual operations performed on the apparatus group 2 via the automated operation procedure performing section 41. The log of manual operations performed directly on the apparatus group 2 may be recorded on paper or stored in a handheld terminal that is not connected to the system 1. In this case, the manual operation log may be input to the manual operation acquiring section 43 by the operator 10.

The correspondence between the operations described above is a temporal relationship, but may be another type of relationship instead. For example, the correspondence between operations may be a relationship of whether these operations are performed as a set. As an example, if another operation is performed before, after, or during the performance of a certain operation, this certain operation and the other operation may correspond to each other due to being executed as a set. In this case, the operation flow generating section 45 may generate the operation flow to include the operations having such a correspondence.

Various embodiments of the present invention may be described with reference to flowcharts and block diagrams whose blocks may represent (1) steps of processes in which operations are performed or (2) sections of apparatuses responsible for performing operations. Certain steps and sections may be implemented by dedicated circuitry, programmable circuitry supplied with computer-readable instructions stored on computer-readable media, and/or processors supplied with computer-readable instructions stored on computer-readable media. Dedicated circuitry may include digital and/or analog hardware circuits and may include integrated circuits (IC) and/or discrete circuits. Programmable circuitry may include reconfigurable hardware circuits comprising logical AND, OR, XOR, NAND, NOR, and other logical operations, flip-flops, registers, memory elements, etc., such as field-programmable gate arrays (FPGA), programmable logic arrays (PLA), etc.

Computer-readable media may include any tangible device that can store instructions for execution by a suitable device, such that the computer-readable medium having instructions stored therein comprises an article of manufacture including instructions which can be executed to create means for performing operations specified in the flowcharts or block diagrams. Examples of computer-readable media may include an electronic storage medium, a magnetic storage medium, an optical storage medium, an electromagnetic storage medium, a semiconductor storage medium, etc. More specific examples of computer-readable media may include a floppy disk, a diskette, a hard disk, a random access memory (RAM), a read-only memory (ROM), an erasable programmable read-only memory (EPROM or Flash memory), an electrically erasable programmable read-only memory (EEPROM), a static random access memory (SRAM), a compact disc read-only memory (CD-ROM), a digital versatile disk (DVD), a BLU-RAY (Registered Trademark) disc, a memory stick, an integrated circuit card, etc.

Computer-readable instructions may include assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, JAVA (Registered Trademark), C++, etc., and conventional procedural programming languages, such as the "C" programming language or similar programming languages.

Computer-readable instructions may be provided to a processor of a general purpose computer, special purpose computer, or other programmable data processing apparatus, or to programmable circuitry, locally or via a local area network (LAN), wide area network (WAN) such as the Internet, etc., to execute the computer-readable instructions to create means for performing operations specified in the flowcharts or block diagrams. Examples of processors include computer processors, processing units, microprocessors, digital signal processors, controllers, microcontrollers, etc.

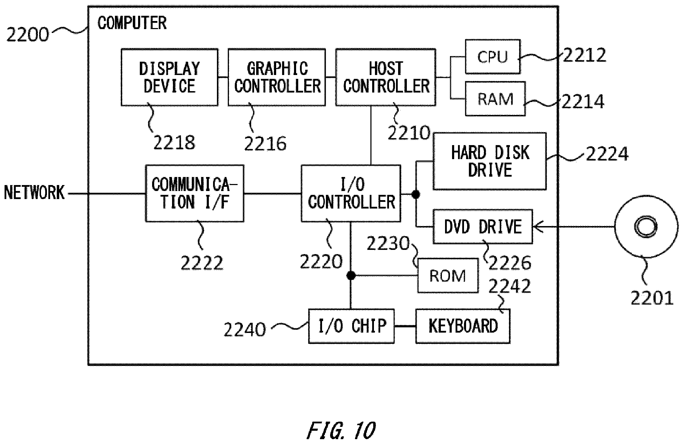

Fig. 10 shows an example of a computer 2200 in which a plurality of aspects of the present invention may be wholly or partly embodied. A program that is installed in the computer 2200 can cause the computer 2200 to function as or perform operations associated with apparatuses of the embodiments of the present invention or one or more sections thereof, and/or cause the computer 2200 to perform processes of the embodiments of the present invention or steps thereof. Such a program may be executed by the CPU 2212 to cause the computer 2200 to perform certain operations associated with some or all of the blocks of flowcharts and block diagrams described herein.

The computer 2200 according to the present embodiment includes a CPU 2212, a RAM 2214, a graphic controller 2216, and a display device 2218, which are mutually connected by a host controller 2210. The computer 2200 also includes input/output units such as a communication interface 2222, a hard disk drive 2224, a DVD-ROM drive 2226 and an IC card drive, which are connected to the host controller 2210 via an input/output controller 2220. The computer also includes legacy input/output units such as a ROM 2230 and a keyboard 2242, which are connected to the input/output controller 2220 through an input/output chip 2240.

The CPU 2212 operates according to programs stored in the ROM 2230 and the RAM 2214, thereby controlling each unit. The graphic controller 2216 obtains image data generated by the CPU 2212 on a frame buffer or the like provided in the RAM 2214 or in itself, and causes the image data to be displayed on the display device 2218.

The communication interface 2222 communicates with other electronic devices via a network. The hard disk drive 2224 stores programs and data used by the CPU 2212 within the computer 2200. The DVD-ROM drive 2226 reads the programs or the data from the DVD-ROM 2201, and provides the hard disk drive 2224 with the programs or the data via the RAM 2214. The IC card drive reads programs and data from an IC card, and/or writes programs and data into the IC card.

The ROM 2230 stores therein a boot program or the like executed by the computer 2200 at the time of activation, and/or a program depending on the hardware of the computer 2200. The input/output chip 2240 may also connect various input/output units via a parallel port, a serial port, a keyboard port, a mouse port, and the like to the input/output controller 2220.

A program is provided by computer readable media such as the DVD-ROM 2201 or the IC card. The program is read from the computer readable media, installed into the hard disk drive 2224, RAM 2214, or ROM 2230, which are also examples of computer readable media, and executed by the CPU 2212. The information processing described in these programs is read into the computer 2200, resulting in cooperation between a program and the above-mentioned various types of hardware resources. An apparatus or method may be constituted by realizing the operation or processing of information in accordance with the usage of the computer 2200.

For example, when communication is performed between the computer 2200 and an external device, the CPU 2212 may execute a communication program loaded onto the RAM 2214 to instruct communication processing to the communication interface 2222, based on the processing described in the communication program. The communication interface 2222, under control of the CPU 2212, reads transmission data stored on a transmission buffering region provided in a recording medium such as the RAM 2214, the hard disk drive 2224, the DVD-ROM 2201, or the IC card, and transmits the read transmission data to a network or writes reception data received from a network to a reception buffering region or the like provided on the recording medium.

In addition, the CPU 2212 may cause all or a necessary portion of a file or a database to be read into the RAM 2214, the file or the database having been stored in an external recording medium such as the hard disk drive 2224, the DVD-ROM drive 2226 (DVD-ROM 2201), the IC card, etc., and perform various types of processing on the data on the RAM 2214. The CPU 2212 may then write back the processed data to the external recording medium.

Various types of information, such as various types of programs, data, tables, and databases, may be stored in the recording medium to undergo information processing. The CPU 2212 may perform various types of processing on the data read from the RAM 2214, which includes various types of operations, processing of information, condition judging, conditional branch, unconditional branch, search/replace of information, etc., as described throughout this disclosure and designated by an instruction sequence of programs, and writes the result back to the RAM 2214. In addition, the CPU 2212 may search for information in a file, a database, etc., in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The above-explained program or software modules may be stored in the computer readable media on or near the computer 2200. In addition, a recording medium such as a hard disk or a RAM provided in a server system connected to a dedicated communication network or the Internet can be used as the computer readable media, thereby providing the program to the computer 2200 via the network.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order. List of Reference Numerals

1: system
2: apparatus group
3: control section
4: operation flow generation apparatus
10: operator
20: apparatus
30: log storage section
40: automated operation procedure acquiring section
41: automated operation procedure performing section
42: automated operation acquiring section
43: manual operation acquiring section
44: correspondence determining section
45: operation flow generating section
46: operation flow storage section
47: display control section
450: granularity adjusting section
101: terminal node
102: process node
200: automated operation procedure
201: terminal node
202: process node
203: condition judgment node
300: operation flow
301: terminal node
302: process node
400: automated operation procedure
401: terminal node
402: process node
403: process node
500: operation flow
501: terminal node
502: process node
2021: process node
2023: process node
2024: process node
2025: process node
2032: condition judgment node
2200: computer
2201: DVD-ROM
2210: host controller
2212: CPU
2214: RAM
2216: graphic controller
2218: display device
2220: input/output controller
2222: communication interface
2224: hard disk drive
2226: DVD-ROM drive
2230: ROM
2240: input/output chip
2242: keyboard
4021: process node
4023: process node
4032: process node

## Claims

1. An operation flow generation apparatus comprising:
a manual operation acquiring section that acquires a log of at least one manual operation performed on at least one apparatus, in relation to performance of an automated operation procedure including at least one automated operation of the at least one apparatus;
a correspondence determining section that determines a correspondence between each of the at least one manual operation and each of the at least one automated operation; and
an operation flow generating section that generates an operation flow including an automated operation step expressing at least one automated operation performed by the automated operation procedure and a manual operation step expressing the at least one manual operation, based on the correspondence.

2. The operation flow generation apparatus according to Claim 1, further comprising:
a display control section that displays the automated operation step and the manual operation step of the operation flow in a manner to be distinguishable from each other.

3. The operation flow generation apparatus according to Claim 2, further comprising:
a first operation flow storage section that stores an amount of manual operations included in the operation flow, in association with each of a plurality of operation flows that are each the operation flow, wherein
the display control section displays the operation flow together with the corresponding amount of manual operations.

4. The operation flow generation apparatus according to Claim 2 or 3, further comprising:
a second operation flow storage section that stores a performance indicator for performance results of the automated operation procedure when the operation flow was generated, in association with each of a plurality of operation flows that are each the operation flow, wherein
the display control section displays the operation flow together with the corresponding performance indicator.

5. The operation flow generation apparatus according to any one of Claims 2 to 4, wherein
the display control section displays a comment appended to any automated operation among the at least one automated operation in a code of the automated operation procedure, in association with the automated operation step expressing this automated operation of the operation flow.

6. The operation flow generation apparatus according to any one of Claims 2 to 5, wherein
the display control section displays a message to be displayed to an operator during performance of any automated operation among the at least one automated operation, in association with the automated operation step expressing this automated operation of the operation flow.

7. The operation flow generation apparatus according to any one of Claims 1 to 6, wherein
the automated operation procedure has a hierarchical structure including a main procedure and at least one sub procedure, and
the operation flow generating section generates an operation flow with at least one hierarchical layer including a hierarchical layer in which the at least one manual operation was performed.

8. The operation flow generation apparatus according to any one of Claims 1 to 7, wherein
the operation flow generating section includes a granularity adjusting section that adjusts granularity of at least one of the automated operation step or the manual operation step.

9. The operation flow generation apparatus according to Claim 8, wherein
the granularity adjusting section causes the granularity of the automated operation step and the manual operation step to be the same.

10. The operation flow generation apparatus according to any one of Claims 1 to 9, wherein
the operation flow generating section generates the operation flow every time the automated operation procedure is performed a reference number of times.

11. The operation flow generation apparatus according to Claim 10, wherein
the reference number of times that the automated operation procedure is performed is a plurality, and
if a performance pattern of at least one of the manual operation or the automated operation differs between performances of the automated operation procedure performed the reference number of times, the operation flow generating section generates the operation flow such that the manual operation step and the automated operation step expressing the manual operation and the automated operation performed during each performance of the automated operation procedure are respectively passed through a plurality of branch paths.

12. The operation flow generation apparatus according to Claim 11, wherein
the operation flow generating section associates each of the plurality of branch paths with a performance probability of this branch path.

13. The operation flow generation apparatus according to any one of Claims 1 to 12, further comprising:
an automated operation acquiring section that acquires a log of an automated operation that was performed, among the at least one automated operation.

14. The operation flow generation apparatus according to Claim 13, wherein
the automated operation acquiring section acquires a log of a start and an end of a procedure included in the automated operation procedure.

15. The operation flow generation apparatus according to Claim 13 or 14, further comprising:
an automated operation procedure performing section that generates a plurality of operation commands for the at least one apparatus, from a code of the automated operation procedure, wherein
the automated operation acquiring section acquires content of the automated operation that was performed, from the automated operation procedure performing section.

16. The operation flow generation apparatus according to any one of Claims 1 to 15, wherein
the manual operation acquiring section acquires content of the at least one manual operation from a control section that controls the at least one apparatus.

17. The operation flow generation apparatus according to any one of Claims 1 to 16, wherein
the at least one manual operation includes a manual operation performed on an apparatus that is not a target of the at least one automated operation, among the at least one apparatus.

18. The operation flow generation apparatus according to any one of Claims 1 to 17, wherein
the correspondence determining section determines the correspondence based on timings at which each of the at least one manual operation and each of the at least one automated operation were performed.

19. The operation flow generation apparatus according to any one of Claims 1 to 18, further comprising:
an automated operation procedure generating section that generates a new automated operation procedure in which each step of the operation flow is expressed by a code of an automated operation.

20. A system comprising:
the operation flow generation apparatus according to any one of Claims 1 to 19; and
a control section that controls the at least one apparatus.

21. A program that causes a computer to function as:
a manual operation acquiring section that acquires a log of at least one manual operation performed on at least one apparatus, in relation to performance of an automated operation procedure including at least one automated operation of the at least one apparatus;
a correspondence determining section that determines a correspondence between each of the at least one manual operation and each of the at least one automated operation; and
an operation flow generating section that generates an operation flow including an automated operation step expressing at least one automated operation performed by the automated operation procedure and a manual operation step expressing the at least one manual operation, based on the correspondence.

22. An operation flow generation method comprising:
acquiring a log of at least one manual operation performed on at least one apparatus, in relation to performance of an automated operation procedure including at least one automated operation of the at least one apparatus;
determining a correspondence between each of the at least one manual operation and each of the at least one automated operation; and
generating an operation flow including an automated operation step expressing at least one automated operation performed by the automated operation procedure and a manual operation step expressing the at least one manual operation, based on the correspondence.
